# EUROPEAN PATENT APPLICATION

(11) **EP 3 166 324 A1**
(43) Date of publication of application: **10.05.2017**
(21) Application number: 14896937.1
(22) Date of filing: 19.12.2014
(51) Int. Cl.: H04Q 11/00

(54) **METHOD AND DEVICE FOR CONTROLLING SILICON OPTICAL CROSS CONNECTION**

(30) Priority: 03.07.2014 CN 201410315934
(71) Applicant: ZTE Corporation, Shenzhen, Guangdong 518057 (CN)
(72) Inventor: YE, Fei, Shenzhen Guangdong 518057 (CN)
(74) Representative: Savi, Massimiliano
(86) International application number: PCT/CN2014/094419
(87) International publication number: WO 2016/000424

(57) **Abstract**

The present invention discloses a method for controlling silicon optical cross connection, which includes that: a first port group is connected to a first device group, a second port group is connected to a second device group, and the first port group and the second port group are connected through a silicon optical crossing matrix. When devices in the first device group need to be optically connected to the devices in the second device group, transceiving ports in the first port group connected to the devices in the first device group are connected, through the silicon optical crossing matrix, to the transceiving ports in the second port group connected to the devices in the second device group. The present invention also discloses an apparatus for controlling silicon optical cross connection.

## Description

### Technical Field

The present invention relates to an optical cross connection technology, and more particularly to a method and apparatus for controlling silicon optical cross connection.

### Background

Along with continuous development of optical communication, people put forward higher and higher requirements on the flexible scheduling of optical signals.

To transmit a signal, which is originally transmitted from A to B, from A to C, the current method is generally connecting three optical fibers to a cross connector. The cross connector needs to convert an optical signal into an electrical signal, and then convert the electrical signal into the optical signal after implementing cross scheduling on the electrical signal to change the transmission destination, so as to achieve the aim of changing cross connection. Such a method needs to convert the optical signal into the electrical signal, and then convert the electrical signal into the optical signal. With the continuous increase of the rate, the electrical cross will run into the bottleneck; besides, the electrical cross requires rate matching.

In a telecommunications room, the optical signal connection between cabinets or transmission units is realized by connecting the optical fibers. After the optical fibers are connected, if there is a need for change, operators are required to change the connected optical fibers manually. For an environment that is required to often change optical paths or a situation where the telecommunications rooms are placed in a remote area, and there is no rear personnel, manually changing the connected optical fibers will bring about a lot of trouble. At present, there are some optical cross connection devices can realize the scheduling of optical signals, but the scheduling is just based on wavelength, which exerts a limit on the wavelength.

### Summary of the Invention

To solve the existing technical problems, the embodiment of the present invention expects to provide a method and apparatus for controlling silicon optical cross connection.

The technical solutions of the embodiment of the present invention are implemented as follows.

The embodiment of the present invention provides a method for controlling silicon optical cross connection, which includes that:
a first port group is connected to a first device group, a second port group is connected to a second device group, and the first port group and the second port group are connected through a silicon optical crossing matrix. When devices in the first device group need to be optically connected to the devices in the second device group, transceiving ports in the first port group connected to the devices in the first device group are connected, through the silicon optical crossing matrix, to the transceiving ports in the second port group connected to the devices in the second device group.

The embodiment of the present invention provides an apparatus for controlling silicon optical cross connection, which includes a first port group, a second port group, a controller and a silicon optical crossing matrix. Herein, the first port group is connected to a first device group, the second port group is connected to a second device group, and the first port group and the second port group are connected through the silicon optical crossing matrix.

The controller is arranged to, when the devices in the first device group need to be optically connected to the devices in the second device group, send to the silicon optical crossing matrix control information about performing optical connection on the devices in the first device group and the devices in the second device group;
the silicon optical crossing matrix is arranged to, according to the control information, connect the transceiving ports in the first port group connected to the devices in the first device group to the transceiving ports in the second port group connected to the devices in the second device group.

According to the method and apparatus for controlling silicon optical cross connection provided by the embodiment of the present invention, the first port group is connected to the first device group, the second port group is connected to the second device group, and the first port group and the second port group are connected through the silicon optical crossing matrix. When the devices in the first device group need to be optically connected to the devices in the second device group, the transceiving ports in the first port group connected to the devices in the first device group are connected, through the silicon optical crossing matrix, to the transceiving ports in the second port group connected to the devices in the second device group. In such a manner, adopting the manner of an all-optical crossing matrix has no need to convert an optical signal into an electrical signal, and then convert the electrical signal into the optical signal, and does not limit a transmission rate and a transmission wavelength. Moreover, in an unattended telecommunications room, adopting the manner of the all-optical crossing matrix is beneficial to realizing flexible optical cross scheduling among transmission devices through remote control.

### Brief Description of Drawings

FIG. 1 is a flowchart of a method for controlling silicon optical cross connection according to an embodiment of the present invention;
FIG. 2 is a structure diagram of a 2N*2N silicon optical crossing matrix in the embodiment of the present invention;
FIG. 3 is a specific flowchart of implementing Step 102 in the embodiment of the present invention;
FIG. 4 is a structure diagram of an apparatus for controlling silicon optical cross connection provided by the embodiment of the present invention;
FIG. 5 is an application schematic diagram of an apparatus for controlling silicon optical cross connection according to an embodiment of the present invention; and
FIG. 6 is a schematic diagram that a controller in the apparatus for controlling controls an optical switch of a silicon optical cross matrix to switch according to an embodiment of the present invention.

### Detailed Description

In the embodiment of the present invention, a first port group is connected to a first device group, a second port group is connected to a second device group, and the first port group and the second port group are connected through a silicon optical crossing matrix. When devices in the first device group need to be optically connected to the devices in the second device group, transceiving ports in the first port group connected to the devices in the first device group are connected, through the silicon optical crossing matrix, to transceiving ports in the second port group connected to the devices in the second device group.

The present invention is further elaborated below in combination with the accompanying drawings and specific embodiments.

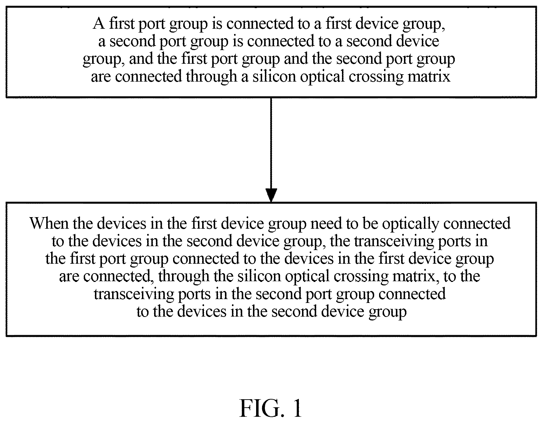

The embodiment of the present invention implements a method for controlling silicon optical cross connection. As shown in FIG. 1, the method includes the following steps.

Step 101: a first port group is connected to a first device group, a second port group is connected to a second device group, and the first port group and the second port group are connected through a silicon optical crossing matrix.

Herein, the first port group has N pairs of transceiving ports, and each pair of transceiving ports have a receiving port and a transmitting port which are used for connecting to corresponding receiving and transmitting optical fibers of an optical transmission device in the first device group, so as to implement emission and reception of light of the optical transmission device. The "light" here is not limited to a single wavelength or a plurality of wavelengths, and is not limited to whether to load signal. Only the light with power is transmitted. The first device group includes N optical transmission devices at most.

The second port group has N pairs of transceiving ports, and each pair of transceiving ports have a receiving port and a transmitting port which are used for connecting to corresponding receiving and transmitting optical fibers of an optical transmission device in the second device group, so as to implement emission and reception of light of the optical transmission device. The second device group includes N optical transmission devices at most.

The silicon optical crossing matrix is a 2N*2N silicon optical crossing matrix, which is connected to the N pairs of transceiving ports in the first port group and the N pairs of transceiving ports in the second port group respectively. The silicon optical crossing matrix does not need a wavelength filtering or wavelength multiplexing and dividing apparatus, does not limit an input wavelength, and can connect the light received by any receiving port in the first port group to any unoccupied transmitting port in the second port group through cross connection.

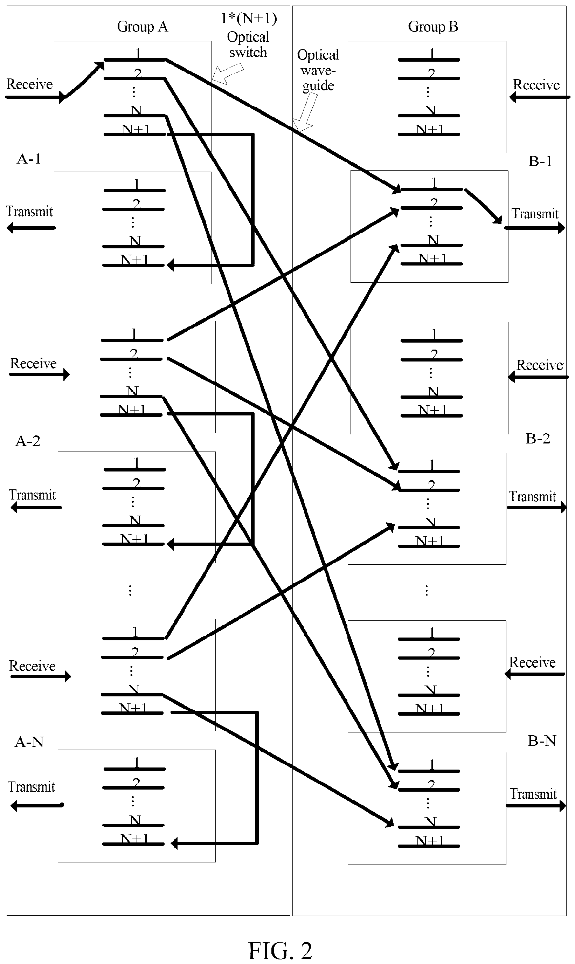

As shown in FIG. 2, the structure of the 2N*2N silicon optical crossing matrix specifically includes the following parts.

A 1*(N+1) optical switch: there is one optical switch corresponding to each receiving port or transmitting port in the first port group A and the second port group B. One end of each optical switch is connected to the corresponding receiving port or transmitting port, and the other N+1 ends are connected to an optical waveguide. Each optical switch can switch among the N+1 ends, for example, for a receiving port, the light enters from the receiving port and outputs from one end of the N+1 ends of the optical switch through the switching of the optical switch. For a transmitting port, the light enters from one end of the N+1 ends of the optical switch, then one end of the N+1 ends is selected through the switching of the optical switch and connected to the transmitting end, and the light outputs from one end of the N+1 ends to the transmitting end; and
an optical waveguide: the optical waveguide connects the optical switch corresponding to each receiving port or transmitting port in the first port group A to the optical switching corresponding to each receiving port or transmitting port in the second port group B. The optical waveguide has a fixed connection mode, and the connection mode has the following rules:
in the N+1 ends of the optical switch corresponding to the receiving port of the first pair of transceiving ports A-1 in the first port group A, the first to the Nth ends are connected, through the optical waveguide, to the transmitting ports of the first to the Nth pairs of transceiving ports in the second port group B respectively, and connected to the first end of the N+1 ends of the optical switch corresponding to the transmitting port. In addition, the (N+1)th end of the optical switch corresponding to the receiving port of the first pair of transceiving ports A-1 can also be connected, through the optical waveguide, to the (N+1)th end of the optical switch corresponding to the transmitting end of the first pair of transceiving ports A-1, which is used for providing an optical layer loopback function;
In general, in the N+1 ends of the optical switch corresponding to the receiving port of the nth pair of transceiving ports A-n in the first port group A, the ith end is connected, through the optical waveguide, to the transmitting port of the ith pair of transceiving ports B-i in the second port group B, and connected to the nth end in the N+1 ends of the optical switch corresponding to the transmitting port. In addition, the (N+1)th end of the optical switch corresponding to the receiving port of the A-n can be connected, through the optical waveguide, to the (N+1)th end of the optical switch corresponding to the transmitting port of the A-n, which is used for providing the optical layer loopback function. Herein the value of n is any of 1 to N, and the value of i is any of 1 to N.

Similarly, the second port group B and the first port group A mirror each other. In the N+1 ends of the optical switch corresponding to the receiving port of the nth pair of transceiving ports B-n in the second port group B, the ith end is connected, through the optical waveguide, to the transmitting port of the ith pair of transceiving ports A-i in the first port group A, and connected to the nth end in the N+1 ends of the optical switch corresponding to the transmitting port. In addition, the (N+1)th end of the optical switch corresponding to the receiving port of the B-n can be connected, through the optical waveguide, to the (N+1)th end of the optical switch corresponding to the transmitting port of the B-n, which is used for providing the optical layer loopback function. Herein the value of n is any of 1 to N, and the value of i is any of 1 to N.

The abovementioned connection mode ensures that the nth end in the N+1 ends of the optical switch corresponding to any receiving port corresponds to the nth transmitting port of the other end, herein the value of n is any of 1 to N; the (N+1)th end is used for loopback of the receiving port and the transmitting port of the device.

FIG. 2 only shows the optical waveguide connection from the first port group A to the second port group B. The optical waveguide connection from the second port group B to the first port group A is mutually mirrored and can be connected according to the above rule, which is not directly shown in the figure.

The step further includes that: the devices connected to each pair of transceiving ports in the first port group and the first device group are marked, and the marks can be names, or serial numbers or model numbers of the devices.

Step 102: when the devices in the first device group need to be optically connected to the devices in the second device group, the transceiving ports in the first port group connected to the devices in the first device group are connected, through the silicon optical crossing matrix, to the transceiving ports in the second port group connected to the devices in the second device group.

Specifically, the devices in the first device group and the devices in the second device group that need to be optically connected are determined according to a connection control instruction of a network management device. When the transceiving ports connected to the devices in the first device group and the devices in the second device group respectively have no other optical connection, the optical switches corresponding to the transceiving ports connected to the devices in the first device group and the devices in the second device group respectively are controlled to switch, so as to connect the receiving port connected to the devices in the first device group to the transmitting port connected to the devices in the second device group, and connect the transmitting port connected to the devices in the first device group to the receiving port connected to the devices in the second device group. When the transceiving ports connected to the devices in the first device group and the devices in the second device group respectively have other optical connections, an instruction about whether to break other connections and establish this new connection is fed back to the network management device, and the optical switches corresponding to the transceiving ports connected to the devices in the first device group and the devices in the second device group respectively are controlled to switch according to a confirmation instruction of the network management device, so as to connect the receiving port connected to the devices in the first device group to the transmitting port connected to the devices in the second device group, and connect the transmitting port connected to the devices in the first device group to the receiving port connected to the devices in the second device group. Or, an optical connection operation performed on the devices in the first device group and the devices in the second device group is cancelled according to a cancellation instruction of the network management device.

The present step further includes that: after the devices in the first device group and the devices in the second device group are optically connected successfully, the connection status of the devices in the first device group and the devices in the second device group is fed back to the network management device, so as to enable the network management device to refresh the optical connection situation of the first device group and the second device group.

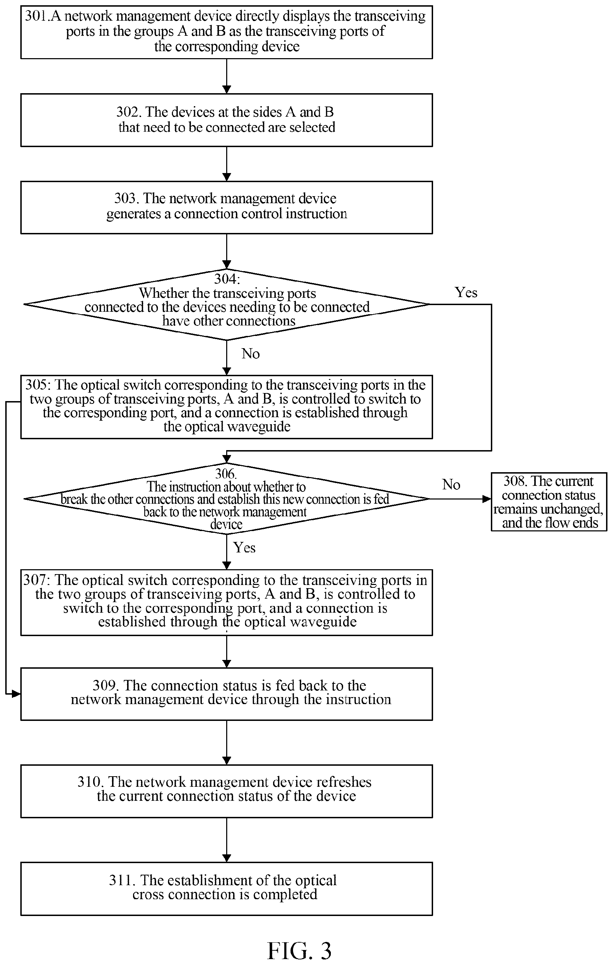

FIG. 3 is a specific flowchart of the present step, and includes the following steps.
Step 301: the network management device directly displays the transceiving ports in the two port groups A and B as the transceiving ports of the corresponding device.
Step 302: the devices at the sides A and B that need to be connected are selected.
Step 303: the network management device generates the connection control instruction.
Step 304: it is judged whether the transceiving ports connected to the devices needing to be connected have other connections; if not, continue to perform Step 305; or else, turn to Step 306.
Step 305: the optical switch corresponding to the transceiving ports in the two port groups A and B is controlled to switch to the corresponding port, and a connection is established through the optical waveguide, so as to complete this cross scheduling. Performing Step 309.
Step 306: the instruction about whether to break the other connections and establish this new connection is fed back to the network management device. When the network management device generates the confirmation instruction, continue to perform Step 307. When the network management device generates the cancellation instruction, turn to Step 308.
Step 307: the optical switch corresponding to the transceiving ports in the two port groups A and B is controlled to switch to the corresponding port, and a connection is established through the optical waveguide, so as to complete this cross scheduling. Performing Step 309.
Step 308: the current connection status remains unchanged, and the flow ends.
Step 309: the connection status is fed back to the network management device through the instruction.
Step 310: the network management device refreshes the current connection status of the device.
Step 311: the establishment of the optical cross connection is completed.

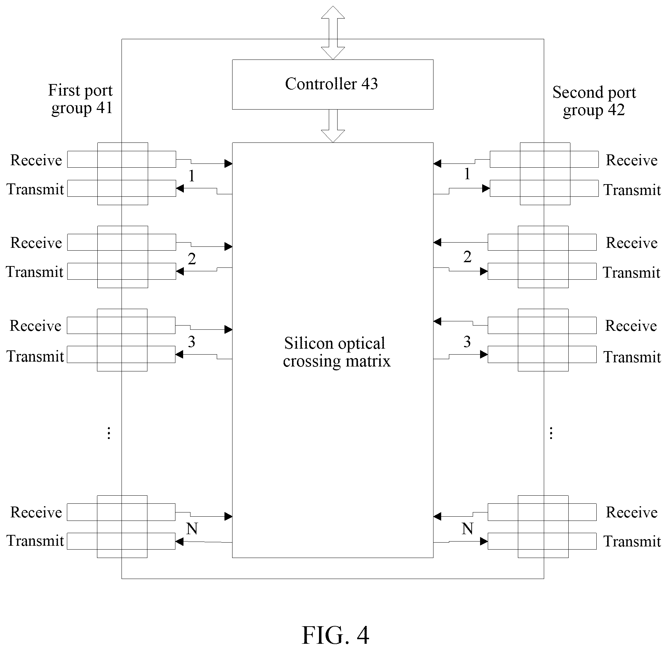

For implementing the method provided by the embodiment of the present invention, the present invention further provides an embodiment of an apparatus for controlling silicon optical cross connection. As shown in FIG. 4, the apparatus includes a first port group 41, a second port group 42, a controller 43 and a silicon optical crossing matrix 44. Herein, the first port group 41 is connected to a first device group, the second port group 42 is connected to a second device group, and the first port group 41 and the second port group 42 are connected through the silicon optical crossing matrix 44.

The controller 43 is arranged to, when the devices in the first device group need to be optically connected to the devices in the second device group, send to the silicon optical crossing matrix 44 the control information about performing optical connection on the devices in the first device group and the devices in the second device group.

The silicon optical crossing matrix 44 is arranged to, according to the control information, connect the transceiving ports in the first port group connected to the devices in the first device group to the transceiving ports in the second port group connected to the devices in the second device group.

The first port group 41 has N pairs of transceiving ports, and each pair of transceiving ports have a receiving port and a transmitting port which are arranged to connect to corresponding receiving and transmitting optical fibers of an optical transmission device in the first device group, which implements emission and reception of light of the optical transmission device. The first device group includes N optical transmission devices at most.

The second port group 42 has N pairs of transceiving ports altogether, and each pair of transceiving ports have a receiving port and a transmitting port which are configured to connect to corresponding receiving and transmitting optical fibers of an optical transmission device in the second device group, which implements emission and reception of light of the optical transmission device. The second device group includes N optical transmission devices at most.

The silicon optical crossing matrix 44 is a 2N*2N silicon optical crossing matrix, which is connected to the N pairs of transceiving ports in the first port group and the N pairs of transceiving ports in the second port group respectively. The silicon optical crossing matrix 44 does not need the wavelength filtering or wavelength multiplexing and dividing apparatus, does not limit the input wavelength, and can connect the light received by any receiving port in the first port group 41 to any unoccupied transmitting port in the second port group 42 through cross connection.

The structure of the 2N*2N silicon optical crossing matrix specifically includes the following parts.

A 1*(N+1) optical switch: there is one optical switch corresponding to each receiving port or transmitting port in the first port group 41 and the second port group 42. One end of each optical switch is connected to the corresponding receiving port or transmitting port, and the other N+1 ends are connected to an optical waveguide. Each optical switch can switch among the N+1 ends, for example, for a receiving port, the light enters from the receiving port and outputs from one end of the N+1 ends of the optical switch through the switching of the optical switch. For a transmitting port, the light enters from one end of the N+1 ends of the optical switch, then one end of the N+1 ends is selected through the switching of the optical switch and connected to the transmitting end, and the light outputs from one end of the N+1 ends to the transmitting end.

An optical waveguide: the optical waveguide connects the optical switch corresponding to each receiving port or transmitting port in the first port group 41 to the optical switching corresponding to each receiving port or transmitting port in the second port group 42. The optical waveguide has a fixed connection mode and the connection mode has the following rules.

In the N+1 ends of the optical switch corresponding to the receiving port of the first pair of transceiving ports in the first port group 41, the first to the Nth ends are connected, through the optical waveguide, to the transmitting ports of the first to the Nth pairs of transceiving ports in the second port group 42 respectively, and connected to the first end of the N+1 ends of the optical switch corresponding to the transmitting port. In addition, the (N+1)th end of the optical switch corresponding to the receiving port of the first pair of transceiving ports in the first port group 41 can also be connected, through the optical waveguide, to the (N+1)th end of the optical switch corresponding to the transmitting end of the first pair of transceiving ports, which is used for providing an optical layer loopback function.

In general, in the N+1 ends of the optical switch corresponding to the receiving port of the nth pair of transceiving ports in the first port group 41, the ith end is connected, through the optical waveguide, to the transmitting port of the ith pair of transceiving ports in the second port group 42, and connected to the nth end in the N+1 ends of the optical switch corresponding to the transmitting port. In addition, the (N+1)th end of the optical switch corresponding to the receiving port of the nth pair of transceiving ports can be connected, through the optical waveguide, to the (N+1)th end of the optical switch corresponding to the transmitting port of the nth pair of transceiving ports, which is used for providing the optical layer loopback function. Herein the value of n is any of 1 to N, and the value of i is any of 1 to N.

Similarly, the second port group 42 and the first port group 41 mirror each other. In the N+1 ends of the optical switch corresponding to the receiving port of the nth pair of transceiving ports in the second port group 42, the ith end is connected, through the optical waveguide, to the transmitting port of the ith pair of transceiving ports in the first port group 41, and connected to the nth end in the N+1 ends of the optical switch corresponding to the transmitting port. In addition, the (N+1)th end of the optical switch corresponding to the receiving port of the nth pair of transceiving ports can be connected, through the optical waveguide, to the (N+1)th end of the optical switch corresponding to the transmitting port of the nth pair of transceiving ports, which is used for providing the optical layer loopback function. Herein the value of n is any of 1 to N, and the value of i is any of 1 to N.

The controller 43 is specifically arranged to determine, according to the connection control instruction of the network management device, the devices in the first device group and the devices in the second device group that need to be optically connected. When the transceiving ports connected to the devices in the first device group and the devices in the second device group respectively have no other optical connection, send to the silicon optical crossing matrix 44 the control information about performing optical connection on the devices in the first device group and the devices in the second device group. When the transceiving ports connected to the devices in the first device group and the devices in the second device group respectively have other optical connections, feed the instruction about whether to break the other connections and establish this new connection back to the network management device, and send to the silicon optical crossing matrix 44 the control information about performing optical connection on the devices in the first device group and the devices in the second device group according to the confirmation instruction of the network management device, or cancel the optical connection operation performed on the devices in the first device group and the devices in the second device group according to the cancellation instruction of the network management device.

The controller 43 is further arranged to, after the devices in the first device group and the devices in the second device group are optically connected successfully, feed the connection status of the devices in the first device group and the devices in the second device group back to the network management device, so as to enable the network management device to refresh the optical connection situation of the first device group and the second device group.

The implementation of the apparatus for controlling silicon optical cross connection is further elaborated below in combination with the accompanying drawings.

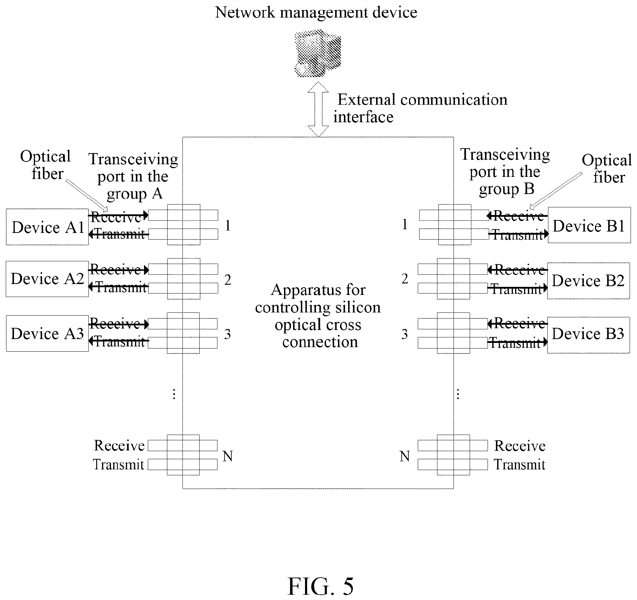

As shown in FIG. 5, when it is needed to connect each three devices of two cabinets, the receiving ports and the transmitting ports of the devices A1, A2 and A3 are connected to the transceiving ports 1, 2 and 3 in the port group A of the apparatus for controlling silicon optical cross connection by using the optical fibers, the transmitting ports of the devices A1, A2 and A3 are connected to the receiving ports of the transceiving ports 1, 2 and 3 in the port group A, the receiving ports of the devices A1, A2 and A3 are connected to the transmitting ports of the transceiving ports 1, 2 and 3 in the port group A, the receiving ports and the transmitting ports of the devices B1, B2 and B3 are connected to the transceiving ports 1, 2 and 3 in the port group B of the apparatus for controlling silicon optical cross connection by using the optical fibers, in the same way of devices A1, A2 and A3. After being connected, the optical fibers have no need to be changed in future use. An external communication interface of the apparatus for controlling is connected to the network management device. Corresponding marks are set for the devices A1, A2, A3, B1, B2 and B3 and the transceiving ports of the apparatus for controlling. The transceiving ports are directly displayed as the name of device, so as to exactly know which two devices are connected with each other when the connection is established.

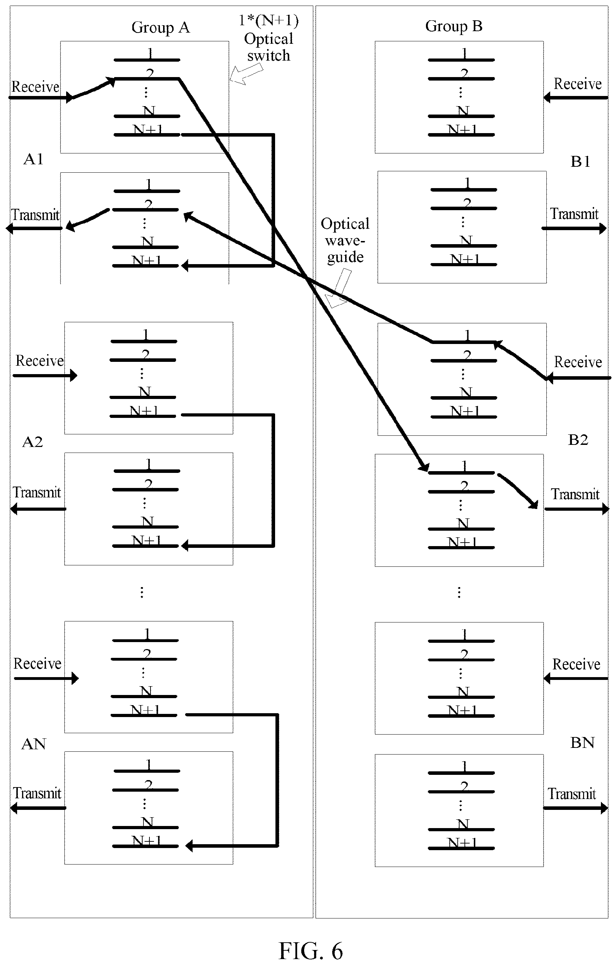

When it is needed to establish an optical cross connection between the device A1 and the device B2, the process that the controller in the apparatus for controlling controls the optical switch of the silicon optical crossing matrix to switch is shown as FIG. 6, that is, all the N+1 ends of the optical switch corresponding to the receiving port and the transmitting port connected to the device A1 are switched to the second end, and all the N+1 ends of the optical switch corresponding to the receiving port and the transmitting port connected to the device B2 are switched to the first end, which realizes the connection between the device A1 and the device B2.

When the device A1 needs its own receiving port and transmitting port to achieve the loopback function, it is only needed to switch the N+1 ends of the optical switch corresponding to the receiving port connected to the device A1 to the (N+1)th end, and switch the N+1 ends of the optical switch corresponding to the transmitting port connected to the device A1 to the (N+1)th end.

The above is only the alternative embodiment of the present invention and not used for limiting the present invention. Any modifications, equivalent replacements, improvements and the like within the spirit and principle of the present invention shall fall within the scope of protection of the present invention.

### Industrial Applicability

Synthesizing the embodiments of present invention, adopting an all-optical crossing matrix has no need to convert an optical signal into an electrical signal, and then convert the electrical signal into the optical signal, and dose not limit a transmission rate and a transmission wavelength. Moreover, in an unattended telecommunication room, adopting the all-optical crossing matrix is beneficial to realizing flexible optical cross scheduling among transmission devices by remote control.

## Claims

1. A method for controlling silicon optical cross connection, comprising:
connecting a first port group to a first device group, connecting a second port group to a second device group, and connecting the first port group and the second port group through a silicon optical crossing matrix, when devices in the first device group need to be optically connected to devices in the second device group, connecting, through the silicon optical crossing matrix, transceiving ports in the first port group connected to the devices in the first device group to transceiving ports in the second port group connected to the devices in the second device group.

2. The method for controlling according to claim 1, wherein the first port group has N pairs of transceiving ports totally, and each pair of transceiving ports have a receiving port and a transmitting port which are used for connecting to corresponding transmitting and receiving optical fibers of an optical transmission device in the first device group;
the second port group has N pairs of transceiving ports totally, and each pair of transceiving ports have a receiving port and a transmitting port which are used for connecting to corresponding transmitting and receiving optical fibers of an optical transmission device in the second device group;
the silicon optical crossing matrix is a 2N*2N silicon optical crossing matrix, which is respectively connected to the N pairs of transceiving ports in the first port group and the N pairs of transceiving ports in the second port group.

3. The method for controlling according to claim 2, wherein the structure of the 2N*2N silicon optical crossing matrix comprises:
a 1*(N+1) optical switch: there is one optical switch corresponding to each receiving port or transmitting port in the first port group and the second port group, one end of each optical switch is connected to the corresponding receiving port or transmitting port, and the other N+1 ends are connected to an optical waveguide, each optical switch can switch among the N+1 ends; and
an optical waveguide: the optical waveguide connects the optical switch corresponding to each receiving port or transmitting port in the first port group to the optical switch corresponding to each receiving port or transmitting port in the second port group.

4. The method for controlling according to claim 3, wherein the optical waveguide has a fixed connection mode, and the connection mode comprises:
in N+1 ends of an optical switch corresponding to a receiving port of a nth pair of transceiving ports in the first port group, connecting, through the optical waveguide, an ith end to a transmitting port of an ith pair of transceiving ports in the second port group, and connecting the ith end to a nth end in the N+1 ends of the optical switch corresponding to the transmitting port;
the optical waveguide connections of the second port group and the first port group A mirror each other; in N+1 ends of an optical switch corresponding to a receiving port of a nth pair of transceiving ports in the second port group, connecting, through the optical waveguide, an ith end to a transmitting port of an ith pair of transceiving ports in the first port group, and connecting the ith end to a nth end in N+1 ends of an optical switch corresponding to the transmitting port; wherein the value of n is any one of 1 to N, and the value of i is any one of 1 to N.

5. The method for controlling according to claim 4, wherein the connection mode further comprises: connecting, through the optical waveguide, the (N+1)th end of the optical switch corresponding to the receiving port of the nth pair of transceiving ports in the first port group to the (N+1)th end of the optical switch corresponding to the transmitting port of the nth pair of transceiving ports in the first port group, which is used for providing an optical layer loopback function; and
connecting, through the optical waveguide, the (N+1)th end of the optical switch corresponding to the receiving port of the nth pair of transceiving ports in the second port group to the (N+1)th end of the optical switch corresponding to the transmitting port of the nth pair of transceiving ports in the second port group, which is used for providing the optical layer loopback function.

6. The method for controlling according to any one of claims 1 to 5, wherein when the devices in the first device group need to be optically connected to the devices in the second device group, connecting, through the silicon optical crossing matrix, the transceiving ports in the first port group connected to the devices in the first device group to the transceiving ports in the second port group connected to the devices in the second device group comprises:
determining, according to a connection control instruction, the devices in the first device group and the devices in the second device group that need to be optically connected; when the transceiving ports respectively connected to the devices in the first device group and the devices in the second device group have no other optical connection, controlling the optical switches corresponding to the transceiving ports respectively connected to the devices in the first device group and the devices in the second device group to switch, so as to connect the receiving port connected to the devices in the first device group to the transmitting port connected to the devices in the second device group, and connect the transmitting port connected to the devices in the first device group to the receiving port connected to the devices in the second device group; when the transceiving ports respectively connected to the devices in the first device group and the devices in the second device group have other optical connections, after it is determined that other connections are broken and this new connection is established, controlling the optical switches corresponding to the transceiving ports respectively connected to the devices in the first device group and the devices in the second device group to switch, so as to connect the receiving port connected to the devices in the first device group to the transmitting port connected to the devices in the second device group, and connect the transmitting port connected to the devices in the first device group to the receiving port connected to the devices in the second device group.

7. An apparatus for controlling silicon optical cross connection, comprising: a first port group, a second port group, a controller and a silicon optical crossing matrix; wherein, the first port group is connected to a first device group, the second port group is connected to a second device group, and the first port group and the second port group are connected through the silicon optical crossing matrix;
the controller is arranged to, when devices in the first device group need to be optically connected to devices in the second device group, send to the silicon optical crossing matrix control information about performing optical connection on the devices in the first device group and the devices in the second device group;
the silicon optical crossing matrix is arranged to, according to the control information, connect transceiving ports in the first port group connected to the devices in the first device group to transceiving ports in the second port group connected to the devices in the second device group.

8. The apparatus for controlling according to claim 7, wherein the first port group has N pairs of transceiving ports totally, and each pair of transceiving ports have a receiving port and a transmitting port which are arranged to connect to corresponding transmitting and receiving optical fibers of an optical transmission device in the first device group;
the second port group has N pairs of transceiving ports totally, and each pair of transceiving ports have a receiving port and a transmitting port which are arranged to connect to corresponding transmitting and receiving optical fibers of an optical transmission device in the second device group;
the silicon optical crossing matrix is a 2N*2N silicon optical crossing matrix, which is respectively connected to the N pairs of transceiving ports in the first port group and the N pairs of transceiving ports in the second port group.

9. The apparatus for controlling according to claim 8, wherein the structure of the 2N*2N silicon optical crossing matrix comprises:
a 1*(N+1) optical switch: there is one optical switch corresponding to each receiving port or transmitting port in the first port group and the second port group; one end of each optical switch is connected to a corresponding receiving port or transmitting port, and the other N+1 ends are connected to an optical waveguide; each optical switch can switch among the N+1 ends; and
an optical waveguide: the optical waveguide connects an optical switch corresponding to each receiving port or transmitting port in the first port group to an optical switch corresponding to each receiving port or transmitting port in the second port group.

10. The apparatus for controlling according to claim 9, wherein the optical waveguide has a fixed connection mode; the connection mode comprises:
in N+1 ends of an optical switch corresponding to a receiving port of a nth pair of transceiving ports in the first port group, connecting, through the optical waveguide, an ith end to a transmitting port of an ith pair of transceiving ports in the second port group, and connecting the ith end to a nth end in N+1 ends of an optical switch corresponding to the transmitting port;
the optical waveguide connections of the second port group and the first port group A mirror each other; in N+1 ends of an optical switch corresponding to a receiving port of a nth pair of transceiving ports in the second port group, connecting, through the optical waveguide, an ith end to a transmitting port of an ith pair of transceiving ports in the first port group, and connecting the ith end to a nth end in N+1 ends of an optical switch corresponding to the transmitting port; wherein the value of n is any one of 1 to N, and the value of i is any one of 1 to N.

11. The apparatus for controlling according to claim 10, wherein the connection mode further comprises: connecting, through the optical waveguide, a (N+1)th end of the optical switch corresponding to the receiving port of the nth pair of transceiving ports in the first port group to a (N+1)th end of the optical switch corresponding to the transmitting port of the nth pair of transceiving ports in the first port group, which is used for providing an optical layer loopback function; and
connecting, through the optical waveguide, a (N+1)th end of the optical switch corresponding to the receiving port of the nth pair of transceiving ports in the second port group to a (N+1)th end of the optical switch corresponding to the transmitting port of the nth pair of transceiving ports in the second port group, which is used for providing the optical layer loopback function.

12. The apparatus for controlling according to claim 7, wherein the controller is arranged to determine, according to a connection control instruction, the devices in the first device group and the devices in the second device group that need to be optically connected; the controller is further arranged to, when the transceiving ports respectively connected to the devices in the first device group and the devices in the second device group have no other optical connection, send to the silicon optical crossing matrix the control information about performing optical connection on the devices in the first device group and the devices in the second device group; the controller is further arranged to, when the transceiving ports respectively connected to the devices in the first device group and the devices in the second device group have other optical connections, cancel an optical connection operation performed on the devices in the first device group and the devices in the second device group according to a cancellation instruction, or send to the silicon optical crossing matrix the control information about performing optical connection on the devices in the first device group and the devices in the second device group according to a confirmation instruction of breaking the other connections and establishing this new connection.

13. The apparatus for controlling according to claim 12, wherein the controller is further arranged to, after the devices in the first device group and the devices in the second device group are optically connected successfully, report connection statuses of the devices in the first device group and the devices in the second device group.
